# Europäisches Patentamt

# European Patent Office

# Office européen des brevets

(19)

(11) Publication number: **0 012 781**
**B1**

(12)

# EUROPEAN PATENT SPECIFICATION

(45) Date of publication of patent specification: **08.02.84**

(51) Int. Cl.³: **F 16 H 21/30, F 01 B 1/08**

(21) Application number: **78300922.8**

(22) Date of filing: **29.12.78**

(54) Expansible chamber apparatus with pairs of cylindrical rollers.

<table>
<tr><td>(43) Date of publication of application:<br>09.07.80 Bulletin 80/14</td><td>(73) Proprietor: Hopkins, Walter M.<br>1306 W. Glenoaks<br>Glendale CA.91201 (US)</td></tr>
<tr><td>(45) Publication of the grant of the patent:<br>08.02.84 Bulletin 84/6</td><td>(72) Inventor: Hopkins, Walter M.<br>1306 W. Glenoaks<br>Glendale CA.91201 (US)</td></tr>
<tr><td>(84) Designated Contracting States:<br>BE DE GB IT LU NL SE</td><td>(74) Representative: Wilson, Joseph Martin et al,<br>WITHERS & ROGERS 4 Dyer's Buildings Holborn<br>London EC1N 2JT (GB)</td></tr>
<tr><td>(56) References cited:<br>DE - C - 11 647<br>FR - A - 1 454 557<br>US - A - 1 535 464<br>US - A - 3 401 568<br>US - A - 3 606 795<br>US - A - 3 641 985</td><td></td></tr>
</table>

Courier Press, Leamington Spa, England.

# Expansible chamber apparatus with pairs of cylindrical rollers

This invention relates to expansible chamber apparatus incorporating at least one pair of rollers.

Alternately expanding and contracting chambers are well known in the art, which devices employ various forms of rings or sliding surface to achieve sealing between adjacent parts. Commonly known is the piston-type combustion engine employing a closed cylinder, in which a piston, coupled to a crankshaft and connecting rod, provides an alternately expanding and contracting chamber. Similarly, the well-known Wankel engine utilizes scraping edge seals between the rotating piston and chamber innner surfaces by which the gases are compressed and expanded. Obviously, such apparatus result in substantial friction between the contacting components thereby causing wear.

In an attempt to avoid these continually wearing seals or rings between moving parts, rotary engines have been proposed in U.S. Patents 1,349,882 and 2,097,881. The earlier patent employs four elliptical pistons between which the narrow spaces are sealed by spring-actuated rollers. In the latter patent, four elliptical rollers are in contact to define a combustion chamber therebetween. The problem with the aforesaid designs is their limitation because of the number of pistons or rollers as well as their shapes. Precise synchronization is required between the rotating and non-cylindrical rotors or pistons which is a sginificant disadvantage in apparatus design, as well as limiting the compression ratio of the chamber.

In another proposal in German Patent Specification No. 11647 there is disclosed a pump having two pairs of cylindrical rollers with an alternately expanding and contracting chamber between the pairs of rollers. The two pairs of rollers move in unison to transfer fluid between an inlet and an outlet positioned between the pairs of rollers. However, that device is not adapted to define a variable volume chamber with an enclosing end wall as well as with sidewalls therefore necessitating a complicated arrangement to provide a variable volume chamber between the pairs of rollers. Moreover, such devices are not coupled to the exterior of the chamber by means engaging the rollers through the end plates.

In accordance with the present invention apparatus having an alternately expanding and contracting chamber comprises a housing having first and second parallel walls and opposed end plates, a pair of rollers having parallel axes disposed in the housing, each roller having an exterior surface in following sealing contact with respective ones of the parallel walls and with an adjacent roller as well as in sealing contact with the opposed end plates, and is characterised in that the variable volume chamber is defined by the rollers and an end wall spaced from said rollers and means for coupling the rollers to the exterior of the housing being provided whereby rotational movement of the rollers is coupled to the exterior of the housing. The first and second parallel walls are preferably adjustable so as to maintain contact with the respective rollers and force them to make contact with each other, thereby compensating for any wear. This contact between the rollers and the side walls, which is continuous and held firmly, and preferably substantially along the entire roller lengths, obviates the necessity of seals and at the same time minimizes frictional wear, thus, greatly increasing the longevity of the apparatus and reducing the incidence of repairs. The apparatus provides at least one alternately expanding and contracting chamber sealed and defined between the rollers and the end wall of the housing. The chamber may be used for treating gases, liquids or slurries. Thus, use of such apparatus may be for engines, pumps, motors, compressors, valves and other power transfer devices and the like. The apparatus is not only a significant improvement because of its relative simplicity of design and reduction in operating costs and repairs but is economically manufactured because of the small number of parts as compared to the devices that require rings, seals, valves, and attendant operating components. The apparatus of the invention also achieves improved economy of performance and maintenance because the rolling action of the rollers themselves which seal the chamber require no lubrication of the roller wall or the major portion of the cavity surfaces. Further, because of the reduction of individual parts in the apparatus, and because the chamber itself is defined between the end and side walls, and the rollers, substantial reduction in weight can be achieved. These as well as other advantages will be evident from the following detailed description.

Brief Description of the Drawings

Fig. 1 is a perspective view, with an end plate and wall partially removed, illustrating the roller apparatus of the invention;

Figs. 2—5 are top plan views showing different positions of the rollers shown in Fig. 1 and chamber expansion and contraction resulting from rotating the rollers successively 90°;

Fig. 6 is a top plan view of two pairs of cylindrical rollers combined to form multiple expanding and contracting chambers.

Fig. 7 illustrates another embodiment utilizing two pairs of rollers;

Fig. 8 illustrates another embodiment utilizing a plurality of pairs of rollers and having a plurality of expanding and contracting chambers;

Fig. 9 is a top plan view of cylindrical rollers illustrating still another embodiment having multiple rollers disposed between the two opposed walls and in continuous rolling engagement with an adjacent roller and two end walls to form a pair of chambers;

Fig. 10 illustrates an embodiment utilizing cylindrical roller segments, and a means for driving the rollers;

Fig. 11 illustrates an embodiment utilizing two pairs of rollers and another form of drive means; and

Fig. 12 is a partial sectional elevation showing roller sealing means.

Detailed Description of the Invention

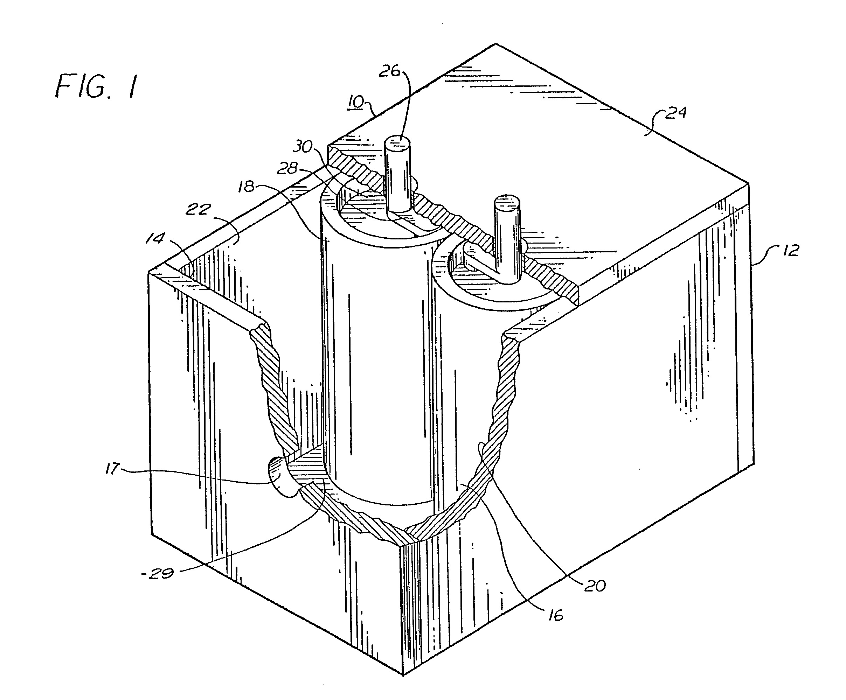

Referring to Fig. 1, a pair of cylindrical rollers 16 and 18 are disposed in a jacket 10 having side walls 20 and 22 and end walls or panels 12 and 14. The two cylinders are maintained in rolling engagement along their surfaces as well as with the inner side wall surfaces. Preferably, the side walls are adjustable to compensate for wear of the cylindrical surfaces. Because of the continuous rolling engagement between the two cylinder surfaces, as well as between the cylinder surfaces and the respective interior side wall surfaces, there is formed a seal between those meeting surfaces which is maintained regardless of the position or location of the cylinders within the jacket.

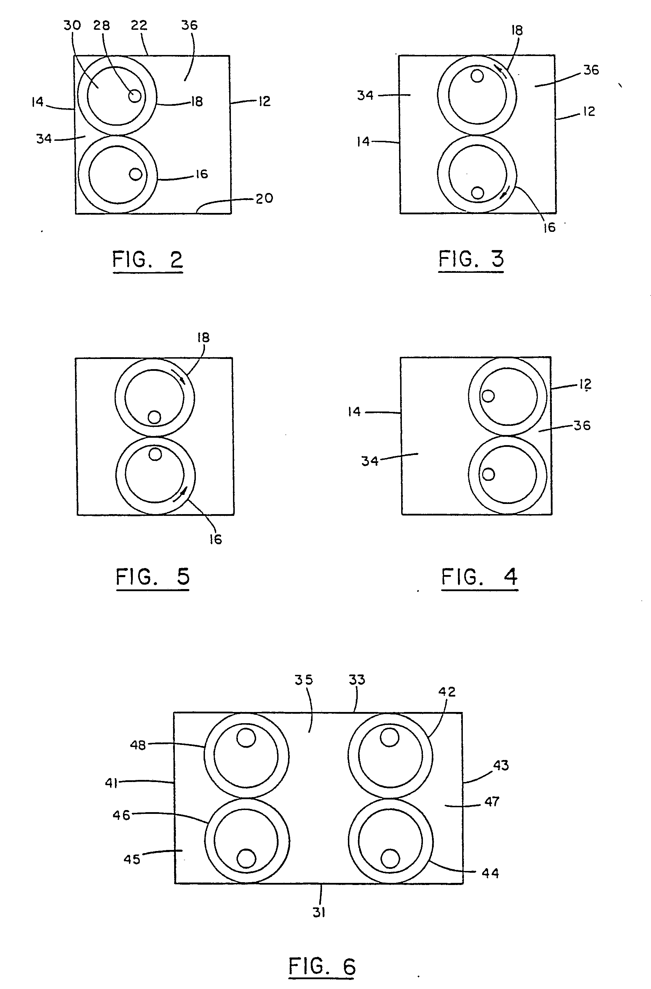

Observing also Figs. 2—5 as the rollers are driven within the hollow jacket cavity, the two chambers formed on each side of the cylinders are alternately and oppositely compressed and expanded. Thus, in Fig. 2, with the cylinders at their closest position relative to end wall 14, chamber 34 is at its smallest volume, although volume of chamber of 36 is greatest. In Fig. 3, the rollers have progressed by rolling in the direction of end wall 12 from opposite wall 14. Accordingly, as the volume of chamber 36 is decreased, the volume of chamber 34 on the opposite side of the rollers is increased. Moreover, because of the continuous rolling seal between both of the cylinders, as well as between each cylinder and its adjacent side wall, the volume of gas or other composition in chamber 36 becomes compressed, while the composition in chamber 34 is expanded. In Fig. 4, the cylinders have arrived at the nearest position relative to end wall 12, exactly opposite of their position illustrated in Fig. 2. Accordingly, the volume in chamber 36 has been reduced to minimum while that of 34 is at its maximum. Fig. 5 illustrates the cylinders at approximately their midpoint in return to the extreme position shown in Fig. 2. Thus, the volumes of the two chambers in Figs. 3 and 5 are substantially identical, with the cylinders being at this same position in both Figs.

In the examples illustrated in Figs. 2—5, the different crank arm positions have been rotated successively 90°. Moreover, the direction of the cylinders is reversed as they travel between the two extreme positions shown in Figs. 2 and 4. Thus, in the examples illustrated, roller 18 will rotate counter clockwise as viewed while roller 16 rotates clockwise, the two rollers travelling at identical or substantially identical rates. This direction of rotation is indicated in Fig. 3 by the directional arrows on each cylinder. Once the position of the cylinders shown in Fig. 4 is reached, i.e., where they are nearest to end wall 12, the rotational direction is immediately reversed, and cylinder 18 rotates clockwise and cylinder 16 counterclockwise as indicated in Fig. 5.

In the apparatus, in order for the cylinders to maintain continuous rolling contact with the sides, the side interior surfaces must be parallel, and each cylinder having a uniform diameter along its entire cylindrical length. The cylinders are also preferably of the same length so that the seal between the cylinders runs the full length of each cylinder. Moreover, the center of each cylindrical roller, i.e., the axis about which each roller rotates, lies along a plane which is perpendicular or normal to the plane of the parallel side walls 20 and 22. In order to provide a complete seal of the chambers in the apparatus, it is necessary that a top and bottom end plate be provided, illustrated as plates 24 and 29 in Fig. 1. These plates are secured to the respective side and end walls, and any seams or joints are filled to provide a complete seal of the chambers interiorly thereof. In addition, these top and bottom plates must be in sealing engagement with the ends of the cylindrical rollers so that as the rollers travel therealong, the seal will be maintained between the two chambers. Further, any means of sealing the top and bottom plates with the roller ends may be used to achieve that purpose.

As previously mentioned, the side walls 20 and 22, which are maintained in continuous contact with the rollers, are preferably adjustable so as to maintain this contact, as well as to urge the rollers together in order to maintain contact between their rolling surfaces. Such an adjustment may be made from time to time, with the side walls having means for such adjustment, or, the walls instead may be permanently biased inwardly against the rollers so that such adjustment is continuous. Any suitable means for biasing or adjusting the walls to meet those requirements may be used, and such means are known to those skilled in the art.

Illustrated in Fig. 1 is a crank means for driving or rotating the cylinders or which are driven by the cylinders where an expensive force occurs in the chambes. Only a portion of the crank apparatus is illustrated in which a crank arm 28 is journaled into a crank arm eccentric mounting 30 supported by bearing means, not shown, and free to revolve within each cylinder. The crank arm eccentric mounting and cylinder share common axes of rotation or centers. Rotation of crankshaft 26 causes crank arm 28 to turn within the crank arm eccentric mounting and force the mounting to rotate within the cylinder. Each cylinder moves until it reaches the end of the crank means throw at which time its motion is reversed. This drive results in continuous reciprocating movement in which the two cylindrical rollers, in firm rolling contact with each other and with the interior side walls, cooperate in forming a cavity of regularly increasing and diminishing size on at least one side of the apparatus.

Synchronization of the crank shafts is accomplished by gear means external to the housing or jacket. It will be noted that each of the rollers includes a crank means, and the crankshafts extend through the housing to appropriate power and drive assemblies. Moreover, the crank drive means may be present on one or both sides of each of the cylinders, as desired. The top plate 24 will be provided with an opening through which the crankshaft or a crankshaft extension will project, and with appropriate sealing means associated with the roller ends. The plate may incorporate suitable bearings to reduce friction with the rotating crankshaft as well as to maintain the shaft firmly in position for rotation. Where other means of driving the rollers are used such as eccentric drive means exteriorly of the housing or jacket, slots through which the roller axles will extend may also be provided in the top wall for reciprocating travel of the respective axles. Moreover, any of the housing walls or plates will also be provided with parts for valve means, not shown, to allow injection of gases or fluids into the chambers at desired volumes. Further, when the apparatus is used for igniting combustible and gaseous or fuel mixtures, the forces of expansion will cause the cylinders to roll along their respective paths thus transferring motion through the crank arm eccentric mounting, crank arm, crankshaft, and gear means. Such a device, when properly assembled for use as a internal combustion engine including spark ignition means and the like, may be used for conventional fuel or other power drive means. The apparatus may be used instead as a pumping or compressor device, where power is applied to rotate the crank shafts, and valving means will be incorporated to allow gas or liquids to enter the chambers at maximum volume become compressed, and exit at minimum volume through port 17 in wall 14.

Although the apparatus in Figs. 1—5 has been referred to as being oriented with plates 24 and 29 being top and bottom plates of the jacket or housing, respectively the apparatus is not to be so limited. For example, the rollers may rotate along horizontal axes rather than vertical, if desired, or any other angle. Thus, the views of Figs. 2—5 may be side elevational views, with the concept and operation of the apparatus being substantially identical, regardless of how the cylinderical rollers or the jacket or housing are oriented. This same orientation applies to the remaining embodi-

ments and apparatus described herein and within the purview of the invention.

Fig. 6 illustrates another embodiment at which two pairs of rollers are utilized. In the apparatus schematically shown, a first pair of rollers 42 and 44, and a second pair of rollers 46 and 48 are positioned in a housing or jacket, which jacket is entirely enclosed on all six sides, with sides 31 and 33 being parallel, and preferably adjustable in order to compensate for any roller wear. Morevoer, as previously explained, these sides are in continuous engagement with the adjacent rollers. The sides also are sealingly secured to end walls 41 and 43, with the top and bottom plates, which are also parallel, required to form sealed chambers 45 and 47. The first pair of rollers comprising rollers 42 and 44 will reciprocate toward and from end wall 43 thereby causing alternate compression and expansion of chamber 47. Similarly, a second pair of rollers comprising rollers 46 and 48 will reciprocate in the direction of and away from end wall 41 to alternately cause compression and expansion of chamber 45.

The crank drive means previously explained regarding Fig. 1 may be incorporated into the respective pairs of rollers in this embodiment, or other drive means may be used for driving or recovering driving force from the rollers. Where the crank means for driving or recovering roller energy as previously explained, utilizing the journaled crank arm and crank arm eccentric mounting are used, each part of cylinders may be driven in the same direction simultaneously, in which chamber 45 will become compressed or reduced as chamber 47 is being expanded. The rollers may be driven in precisely synchronize these movements so that each pair of rollers reaches the end of their respective travel in the same direction at precisely the same instant. On the other hand, it may be desirable to achieve some other volume relationship between the two chambers so that some other synchronized or even a different chamber volume relationship may be achieved as desired.

It will be understood that where the roller movement is such that the pairs of rollers are synchronized for movement in the same direction, the overall length of the jacket in which the chamber is located is not so critical, because there will be no chance that the rollers of different pairs will meet. On the other hand, the apparatus may be used and designed so that each pair of rollers will move in opposite directions at the same time, whereby roller pair (42 and 44) will be moving toward a center of the jacket at the same time and at the same rate as roller pair (46 and 48). In such a design, with the rollers properly synchronized by suitable gearing means cooperating with the crank means, chambers 45 and 47 will expand and contract at the same rate having precisely the same volumes at the same instant. Such an embodiment may be preferred where double compression and expansion capacities are desired. Morever, utilizing this same embodiment, a third chamber 35 may be utilized which also is alternately expanded and contracted by recirprocating roller movement. It will be evident that in the opposite roller movement just described, as the chambers 45 and 47 are expanding, chamber 35 will be compressing and vice-versa. Thus, this letter embodiment may be used to take advantage of the third chamber. Such an embodiment will require that the jacket in which the roller pairs operate be of a sufficient length so that as opposing rollers of the respective pairs are at their closest position near the center of the third chamber 35, they do not make contact, although they may approach one another very closely. Again, to take advantage of the full utilization of the third alternately expanding and contracting chamber 35, roller synchronization must be precise as previously explained.

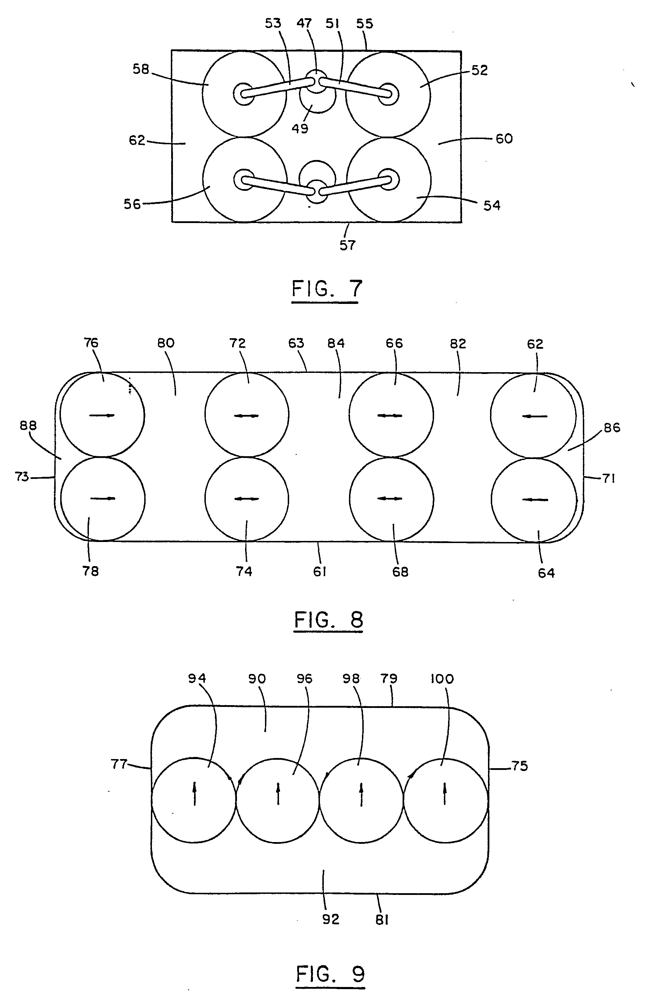

Fig. 7 illustrates a two roller pair embodiment similar to that illustrated in Fig. 6, except that the pairs of rollers are driven reciprocally in the same direction, and at the same rate. For this purpose, crankshaft 49 and eccentric crank arm 47 thereon drive pivotally attached drive rods 51 and 53, each one being pivotally secured to a different roller. Preferably, these drive rods are secured to roller axles, so that as the crankshaft and arm rotate, the drive rods 51 and 53 alternately pull and push the rollers causing reciprocal movement of rollers 52 and 58 of the different pairs. A similar arrangement causes reciprocal motion in the same direction and at the precise same time of rollers 54 and 56. In other words, the crankshaft and arm for both the upper and lower rollers shown will be synchronized so that the axes of the pair of rollers 52 and 54 will lie along a single plane perpendicular with parallel side walls 55 and 57. The same synchronized movement will also be realized with rollers 56 and 58. Accordingly, such movement result in substantially identical expansion and contraction of chamber 60 and 62 at the same time.

In the drive means illustrated for the apparatus of Fig. 7 the axles around which each cylindrical roller rotates, and which axles are parallel, will extend through elongated slots formed in top and bottom end plates, and in sealing and bearing engagement therein. In this figure, such a plate through which the axles of each roller will extend has been removed for viewing the apparatus as illustated, but slots formed therein will accommodate the axles for the rollers which are driven by drive rods 51 and 53, as well as those for rollers 54 and 56 as described and shown.

Fig. 8 shows another alternative embodiment of the appratus incorporating the inventive concept previously described. In the apparatus shown, four pairs of rollers are assembled, each pair of rollers rotating on or about axles which, when aligned for the respective roller pairs extend normal to or 90° with respect to parallel side walls 61 and 63. The different pairs of rollers may be synchronized in different manners, but preferably may utilize or take advantage of five chambers 86, 82, 84, 80 and 88. Chamber 86 may be alternately expanded and contracted as may opposing chamber 82 as roller pairs 62 and 64 reciprocate. Full advantage of such an assembly may be achieved with the pair of rollers 62 and 64 moving at the same rate but oppositely of roller pairs 66 and 68 so that chamber 82 will be fully expanded and contracted by such opposite roller pair movement. Similarly, roller pair 76 and 78 may move at the same rate but precisely oppositely from roller pair 72 and 74 whereby chamber 80 is alternately expanded and contracted. Further, with proper roller pair reciprocal synchronization, chamber 84 may be fully utilized, so that roller pair 72 and 74 will move precisely oppositely from roller pair 66 and 68. As this occurs, chambers 88 and 86 will be expanded and contracted, at the same time and at the same rate and as chambers 86, 88 and 84 are fully expanded, chambers 80 and 82 are fully compressed, and vice versa. It will be evident from this example, that in addition to one and two pairs of rollers, as previously described, any multiples thereof may be used within the purview of the invention to achieve the desired number of expanding and contracting chambers, in any single or multiple apparatus, and the invention is not limited to the specific numbers of pairs of cylindrical rollers and chambers shown.

Fig. 9 illustrates a different embodiment utilizing pairs of rollers, in this instance the pairs being stacked or aligned so that each roller rotates about an axis along a single common plane, and which plane is perpendicular to the end plates along which the end rollers are maintained in rolling engagement. Thus, in the embodiment shown, rollers 94, 96, 98 and 100 are aligned with all of their axes being aligned along a single plane, which extends perpendicular to side walls 77 and 75. End walls 79 and 81 co-operate with the side walls to enclose chambers 90 and 92, which are alternately expanded and contracted as the four rollers reciprocate together alternately toward and away from one of the end walls, 79 or 81. Moreover, end roller 94 is in continuous rolling engagement with side wall 77 along the entire roller length, while end roller 100 is similarly in continuous rolling engagement or contact with side wall 75. Each of the rollers is also in continuous rolling contact along its entire length with the adjacent roller or rollers, assuming all of the cylindrical rollers are of the same length, as they are in the preferred embodiment. This rolling contact between the rollers and end rollers with the side walls forms a continuous seal to take advantage of the contracting and expanding chambers. The direction of the different roller rotation is illustrated by the arrows shown on the roller peripheral surfaces for roller directional movement illustrated by the arrows in the center of the rollers. It will be evident that adjacent and contacting rollers will rotate in opposite directions, with the two end rollers 94 and 100 also rotating oppositely, but being driven along the same direction relative to the two opposing side walls 75 and 77.

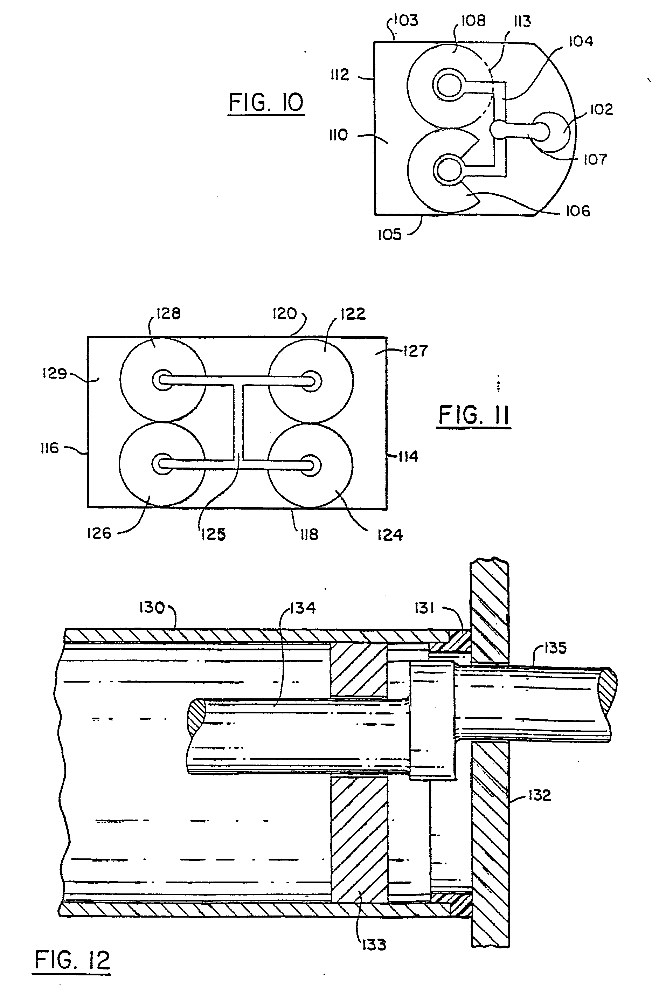

Fig. 10 illustrates an embodiment of a pair of rollers in which one of the roller bodies is a cylinder segment, while the other roller is slotted. A purpose of such an embodiment is to illustrate that where the cylindrical roller surface is not entirely utilized for rolling contact with an adjacent roller and housing interior wall, only a portion of the cylinder roller may be used, so long as the remaining cylindrical surface segment is sufficient to provide rolling contact. In other words, where the travel of the rollers is not such as to require rolling engagement of an entire circumferential surface, a segmented roller 106 may be used, which will further reduce the overall weight or mass of the roller and apparatus. Roller 108 is hollow and slotted to accommodate arm 104. The roller surface thus is provided with a slot 113, indicated by the dotted line, the length of the slot being sufficient to avoid roller interference with the arm during operation. Thus, the rollers need not be solid, but may be hollow, so long as sufficient structure is present to not interfere with, or detract from the efficiency of the apparatus operation.

Another feature of the embodiment illustrated in Fig. 10 is that only a single chamber is utilized, thereby requiring only a single end wall opposite the rollers for defining and closing the chamber, rather than the pair of walls defining and closing a pair of opposed chambers as previously described. In the embodiment shown, end wall 112 is sealed and secured to parallel side walls 103 and 105, which side walls are preferably adjustable so as to maintain contact against the adjacent roller surfaces and to maintain roller contact. A single alternately expanding and contracting chamber 110 is sealed between the two roller segments, the side walls and end wall, the top and bottom end plates not being illustrated but being understood. The means for driving the pair of roller segments 106 and 108 is a crankshaft 102 having a drive shaft 107 eccentrically and pivotally secured thereon, so that rotation of the crank 102 causes reciprocal movement of the drive shaft. The opposite drive shaft end is pivotally secured to a connecting arm 104, which is secured to the axles of the different cylinder segments. Thus, rotation of drive plate 102 causes reciprocal movement of the roller segments towards and away from end wall 112. If the apparatus illustrated is used, the cylinder segments are driven where a gas is expanded within chamber 110, the resulting work for driving crankshaft 102 may be utilized. The crankshaft, connecting arms and rods illustrated may be housed within the apparatus housing, or it may be exteriorly mounted. Again the roller segment embodiment may be used for modification of any of the previously described cylindrical roller assemblies, where weight reduction is desired. Morever, the previously described roller pair apparatus of Figs. 1—5 may utilize only a single chamber embodiment where opposing sealed chambers are not required or desired.

Fig. 11 shows still another embodiment of the roller pair apparatus in which a rigid structural support 125 is secured to each of the roller axles. With such a device, the rollers all move in the same direction at precisely the same time, resulting in chamber 127 being contracted while chamber 129 is being expanded, and vice versa. Again, according to the requirements of the invention, each roller of each pair is in rolling and sealing contact with the other roller of that pair, and in rolling and sealing contact with one of the parallel side walls. Thus, rollers 122 and 128 are in rolling contact with side wall 120, while roller 124 and 126 are in sealing and rolling contact with side wall 118, which side wall is parallel with side wall 120. The sealed housing structure is completed with end walls 114 and 118, and not shown, covering the roller ends and in sealing engagement therewith. Such end walls are provided with slots for movement of the roller axles or extensions which are attached to the support 125.

Fig. 12 illustrates a means for sealing the roller ends with the end plates as previously noted. In the example illustrated, the roller 130 is hollow, and has a recessed eccentric mounting member 133, rotatably secured and with bearing means not shown, into which crank arm 134 is journaled. At the cylinder end is secured a sealing ring 131, which ring engages the exposed interior surface of end plate 132, thereby sealing off the cavity. As the roller is rotated, the sealing ring continuously engages the polished interior end plate surface as the roller moves reciprocally as previously described. Crank shaft 135 is journaled into and extends beyond end plate 132.

The material of the rollers may be rigid including metal or rigid plastics, or may be more flexible such as flexible and compressible plastics or elastomers. The specific material comprising the rollers will depend on the use of the apparatus, the material requirements being only such that the rollers will function properly and adequately to maintain the rolling seals, with the specific material being selected to meet the necessary functional apparatus requirements including friction reduction and wear resistance, since the seals will be in continuous sliding engagement with the interior end plate surface. The apparatus may be provided with passageways or ports in the walls whereby fluids may be introduced into and removed from the chamber. These ports may be positioned for exposure to the chamber in desired roller positions, especially utilizing the eccentric or reciprocal rollers for alternately opening or closing the ports as the rollers cover and uncover the ports with respect to the chamber. Accordingly, such ports may be advantageously positioned whether the apparatus is to be used in a four or two cycle combustion chamber process, or whether other fluids are simply introduced and expanded or compressed by the apparatus.

The orientation of the rollers in the apparatus is not particularly critical, unless specific use requirements dictate such orientation. Thus, for example, the rollers may rotate along horizontal or vertical axes, or any other angle. Accordingly, the views shown may be side elevational views or top plan views, with the concept of and operation of the apparatus otherwise being substantially identical, regardless of how the cylindrical rollers or the housing or end plates are oriented. Although the drawings show substantially similar roller diameters, such a limitation is not critical. Instead, the rollers in an apparatus may be of different diameters, so long as each roller has a uniform diameter.

The advantages of the apparatus of the invention, as previously explained, include the obviation of lubrication of wall surfaces surrounding the expanding and contracting chambers because of the rolling action of the rollers which produce minimum friction. Moreover, combustion chamber sizes are easily adjusted to create desired power output, and the components are readily interchangeable. Engine torque may be determined by the location and dimension of a single part, i.e., the eccentric power output shaft, and forces of combustion are distributed over a large and changing area of cylinder walls and through a multiplicity of shafts and connecting arm bearings, rather than through one piston, one wrist pin bearing and a single crankshaft bearing. Moreover, rotating parts which form the working chamber in an internal combustion or heat engine embodiment are exposed to a cooling medium over most of the cylinder wall surfaces during each revolution. Thus, only a portion of the cylinder or roller walls are exposed to the heat and forces continually throughout the entire cycle since the heated roller areas are continually proceeding to a cooling medium. As use results in engine wear, adjustment of the parallel side walls will maintain seal integrity without disassembly of major engine components. Moreover, continued operation may cause the common roller surfaces to machine themselves to a progressively more compatible fit. Because of the lightweight and low mechanical mass of reciprocating parts (rollers), higher rotational speeds are possible. Further, the chamber sizes may be adjusted by simply varying dimensions of the eccentric roller crank or by the insertion or deletion of volume reducing members which occupy unused chamber volume. Additional advantages include the possibility of large chambers created with only a small movement of a crank means, a minimum number of moving parts, and whereby cooling or lubricating means is easily introduced into the cylinder interior through crankshafts. Such apparatus within the invention described herein is inexpensive to manufacture, is adjustable for wear by external means even while the apparatus is in operation, and is easily arranged in multiple chambers for concerted operation and balanced movement. These as well as other advantages and equivalent embodiments within the purview of the invention are described herein will be evident to those skilled in the art.

## Claims

1. Apparatus having an alternately expanding and contracting chamber (34, 36) comprising a housing having first and second parallel walls (20, 22) and opposed end plates (24, 29) a pair of rollers (16, 18) having parallel axes disposed in the housing, each roller having an exterior surface in following sealing contact with respective ones of the parallel walls and with an adjacent roller as well as in sealing contact with the opposed end plates (24, 29), characterised in that the variable volume chamber (34, 36) is defined by the rollers (16, 18) and an end wall (12) spaced from said rollers (16, 18) and means (26, 28, 30) for coupling the rollers (16, 18) to the exterior of the housing are provided whereby rotational movement of the rollers is coupled to the exterior of the housing.

2. Apparatus according to claim 1 characterised by the provision of a second end wall (14) spaced from said rollers (16, 18) whereby a second chamber (36) is defined between said rollers and said second end wall.

3. Apparatus according to claim 1 or 2 characterised by two pairs of rollers (42, 44, 46, 48) and means for rotating said pairs of rollers simultaneously in opposite directions, whereby a third alternately expanding and contracting chamber (35) is defined between said pairs of rollers (42, 44, 46, 48).

4. Apparatus according to claim 3, characterised by the provision of means for coupling the two pairs of rollers (42, 44, 46, 48) to the exterior of the housing.

5. Apparatus according to claim 1 or 4, characterised by the provision of drive means cooperating with said rollers (16, 18, 42, 44, 46, 48) for imparting rotation thereto.

6. Apparatus according to claim 1 characterised in that at least one of said rollers (130) is hollow and includes end seals (131) in sealing contact with a respective end plate, drive means (135) journaled through at least one of said end plate (132), extending through one of said seals and coupled to said roller for transmitting rotational movement between said roller (130) and the exterior of the chambers.

7. Apparatus according to claim 1, characterised by the provision of at least one opening (17) communicating with the interior of said chamber (34) for permitting entrance or exit of substances or fluids to or from said chamber (34).

8. Apparatus according to any one of the preceding claims characterised in that the rollers (16, 18; 42, 44, 46, 48; 130) are elongated, have substantially equal lengths, and that respective pairs of rollers are in rolling contact with each other substantially along their entire respective lengths.

9. Apparatus according to claim 8 characterised in that the rollers have substantially equal diameters.

10. Apparatus according to claim 1 characterised in that at least one of said rollers (106) comprises an elongated cylindrical segment with a discontinuous exterior surface of equal radius.

11. Apparatus having an alternately expanding and contracting chamber (90, 92) comprising a housing having first and second parallel walls (75, 77) and opposed end plates, a plurality of four or more even numbered rollers (94, 96, 98, 100) having parallel axes disposed in the housing, each roller having an exterior surface in following sealing contact with the exterior surface of an adjacent roller and with the opposed end plates characterised in that, the rollers (94, 96, 98, 100) are aligned whereby the respective roller axes lie in a single plane, a roller (94, 100) at each end of said plurality of aligned rollers is in the rolling sealing contact with a respective one of said parallel walls (75, 77) the variable volume chamber is defined by the rollers (94, 96, 98, 100) and an end wall (79) spaced from said rollers, and means for coupling the rollers to the exterior of the housing are provided whereby rotational movement of ther rollers is coupled to the exterior of the housing.

### Patentansprüche

1. Vorrichtung mit einer wechselweise expandierenden und sick kontrahierenden Kammer (34, 36), bestehend aus einem Gehäuse mit ersten und zweiten parallel zueinander verlaufenden Wänden (20, 22) und mit gegenüberliegen-den Endplatten (24) sowie aus einem Paar von Walzen (16, 18) mit parallelen Achsen, die innerhalb des Gehäuses angeordnet sind und von denen jede Walze eine Außenfläche aufweist, die in aufeinanderfolgendem Dichtkontakt mit der entsprechenden der parallelen Wände und mit einer angrenzenden Walze und auch im dichten Kontakt mit den gegenüberliegenden Endplatten (24, 29) stehen, dadurch gekennzeichnet, daß die Kammer mit variablem Volumen (34, 36) durch die Walzen (16, 18) und eine Endwand (12) begrenzt wird, die im Abstand zu den Walzen (16, 18) angeordnet sind und daß Mittel (26, 28, 30) zur Verbindung der Walzen (16, 18) mit dem Äußeren des Gehäuses vorgesehen sind, wobei die Rotationsbewegung der Walzen mit dem Äußeren des Gehäuses gekoppelt ist.

2. Vorrichtung nach Anspruch 1, gekennzeichnet dadurch, daß eine zweite Endwand (14) im Abstand zu den Walzen (16, 18) vorgesehen ist, wodurch eine zweite Kammer (36) zwischen den Walzen und der zweiten Endwand begrenzt wird.

3. Vorrichtung nach Anspruch 1 oder 2, gekennzeichnet durch zwei Walzenpaare (42, 44, 46, 48) und durch Mittel, diese Walzenpaare gleichzeitig in entgegengesetzter Richtung anzutreiben, wodurch eine dritte wechselweise expandierende und sich kontrahierende Kammer (35) zwischen den Walzenpaaren (42, 44, 46, 48) gebildet wird.

4. Vorrichtung nach Anspruch 3, dadurch gekenzeichnet, daß Mittel zur Kupplung der beiden Walzenpaare (42, 44, 46, 48) mit dem Äußeren des Gehäuses vorgesehen sind.

5. Vorrichtung nach Anspruch 1 oder 4, dadurch gekennzeichnet, daß Antriebsmittel vorgesehen sind, die mit den Walzen (16, 18, 42, 44, 46, 48) zur Erzeugung von deren Rotation zusammenwirken.

6. Vorrichtung nach Anspruch 1, dadurch gekennzeichnet, daß mindestens eine der Walzen (130) hohl ist und Enddichtungen (131) Dichtkontakt mit einer zugeordneten Endplatte aufweist und daß Antriebsmittel (135) in mindestens einer der Endplatten (132) gelagert sind, die sich durch eine der Dichtungen erstrecken und mit der Walze zur Übertragung der Rotationsbewegung zwischen der Walze (130) und dem Äußeren der Kammern verbunden sind.

7. Vorrichtung nach Anspruch 1, dadurch gekennzeichnet, daß mindestens eine Öffnung (17) zum Inneren der Kammer (34) vorgesehen ist, welche den Ein- oder Austritt von Substanzen oder Fluiden in oder aus der Kammer (34) ermöglichen.

8. Vorrichtung nach einem der vorhergehenden Ansprüche, dadurch gekennzeichnet, daß die Walzen (16, 18, 42, 44, 46, 48, 130) länglich und mit in wesentlichen gleicher Länge ausgebildet sind und daß die einander zugeordneten Walzenpaare untereinander in wesentlichen über ihre ganzen zugeordneten Längen in Rollkontakt stehen.

9. Vorrichtung nach Anspruch 8, dadurch gekennzeichnet, daß die Walzen in wesentlichen den gleichen Durchmesser aufweisen.

10. Vorrichtung nach Anspruch 1, dadurch gekennzeichnet, daß mindestens eine der Walzen (106) ein längliches zylindrisches Segment mit einer unterbrochenen Außenfläche gleichen Radius aufweist.

11. Vorrichtung mit einer wechselweise expandierend und sich kontrahierenden Kammern (90, 92), bestehend aus einem Gehäuse mit ersten und zweiten parallelen Wänden (75, 77) und gegenüberliegenden Endplatten sowie aus einer Vielzahl von vier oder mehr geradzahligen Walzen (94, 96, 98, 100) mit parallelen Achsen, die in dem Gehäuse angeordnet sind, wobei jede Walze eine Außenfläche aufweist, die in aufeinanderfolgendem Dichtkontakt mit der Außenfläche einter benachbarten Walze und mit den gegenüberligenden Endplatten steht, dadurch gekennzeichnet, daß die Walzen (94, 96, 98, 100) zueinander ausgerichtet sind, wobei die entsprechenden Walzenachsen in einer einzigen Ebene liegen, daß eine Walze (94, 100) an jedem Ende der Vielzahl von zueinander ausgerichteten Walzen in einem rollenden Dichtkontakt mit einer der zugeordneten parallelen Wände (75, 77) steht, so daß die Kammer mit variablem Volumen durch die Walzen (94, 96, 98, 100) und einer Endwand (79) gebildet wird, die im Abstand von den Walzen liegen und daß Mittel zur Verbindung der Walzen mit dem Äußeren des Gehäuses vorgesehen sind, wodurch die Rotationsbewegung der Walzen mit dem Äußeren des Gehäuses gekuppelt ist.

**Revendications**

1. Appareil ayant une chambre (34, 36) alternativement expansible et contractile comprenant un logement ayant une première et une seconde parois parallèles (20, 22) et des fonds opposés (24, 29), une paire de rouleaux (16, 18) ayant des axes parallèles disposés dans le logement, chaque rouleau ayant une surface extérieure en contact d'obturation continu respectivement avec l'une ou l'autre des parois parallèles et avec un rouleau adjacent ainsi qu'en contact d'obturation avec les plaques d'extrémités opposées (24, 29) caracterisé en ce que la chamber à volume variable (34, 36) est limitée par les rouleaux (16, 18) et par une paroi d'extrémité (12) écartée desdits rouleaux (16, 18) et que des moyens (26, 28, 30) pour accoupler les rouleaux (16, 18) à l'extérieur du logement sont établis de façon qu'un mouvement de rotation des rouleaux soit accouplé à l'extérieur du logement.

2. Appareil selon la revendication 1 caractérisé par la disposition d'une seconde paroi d'extrémité (14) écartée desdits rouleaux (16, 18) de sorte qu'une seconde chambre (36) est délimitée entre lesdits rouleaux et ladite paroi d'extrémité.

3. Appareil selon la revendication 1 ou la revendication 2, caractérisé par deux paires de rouleaux (42, 44, 46, 48) et par un moyen pour faire tourner lesdites paires de rouleaux simultanément en sens inverses de sorte qu'une troisième chambre (35) alternativement expansible et contractile est délimitée entre lesdites paires de rouleaux (42, 44, 46, 48).

4. Appareil selon la revendication 3, caractérisé par la disposition de moyens pour accoupler les deux paires de rouleaux (42, 44, 46, 48) à l'extérieur du logement.

5. Appareil selon la revendication 1 ou la revendication 4, caractérisé par la disposition de moyens d'entrainement coopérant avec les dits rouleaux (16, 18, 42, 44, 46, 48) pour leur communiquer une rotation.

6. Appareil selon la revendication 1 caractérisé en ce qu'au moins l'un desdits rouleaux (130) est creux et comprend des joints d'extrémités (131) en contact d'obtruation avec une plaque d'extrémité respective, un moyen d'entrainement (135) pivotant à travers au moins une des dites plaques d'extrémité (132) en s'étendant à travers l'un desdits joints et en étant accouplé audit rouleau pour transmettre un mouvement de rotation entre ledit rouleau (130) et l'extérieur des chambres.

7. Appareil selon la revendication 1, caractérisé par la disposition d'au moins une ouverture (17) communiquant avec l'intérieur de ladite chambre (34) pour permettre l'entrée ou la sortie de substances ou de fluides vers la dite chambre (34) ou en provenance de cette chambre.

8. Appareil selon l'une quelconque des revendications précédentes, caractérisé en ce que les rouleaux (16, 18, 42, 44, 46, 48; 130) sont allongés, présentent des longueurs égales et que les paires respectives de rouleaux sont mutuellement en contact de roulement le long de toutes leurs longeuers respectives.

9. Appareil selon la revendication 8, caractérisé en ce que les rouleaux ont des diamètres pratiquement égaux.

10. Appareil selon la revendication 1, caractérisé en ce qu'au moins l'un desdits rouleaux (106) comprend un segment cylindrique allongé avec une surface extérieure discontinue d'un rayon égal.

11. Appareil ayant une chambre (90, 92) alternativement expansible et contractile comprenant un logement ayant une première et une seconde parois parallèles (75, 77) et des plaques d'extrémités opposées, une pluralité de quatre ou d'un plus grand nombre pair de rouleaux (94, 96, 98, 100) ayant des axes parallèles disposés dans le logement, chaque rouleau ayant une surface extérieure en contact d'obturation continue avec la surface extérieure d'un rouleau adjacent et avec les plaques d'extrémités opposées, caractérisé en ce que les rouleaux (94, 96, 98, 100) sont en alignement de sorte que les axes respectifs des rouleaux se trouvent dans un même plan, un rouleau (94, 100) à chaque extrémité de ladite pluralité de rouleaux en alignement est en contact d'obturation par roulement avec l'une desdites parois parallèles (75, 77), la chambre de volume variable est délimitée par les rouleaux (94, 96, 98, 100) et une paroi d'extrémité (79) écartée desdits rouleaux et des moyens pour accoupler les rouleaux à l'extérieur de l'enveloppe sont prévus de façon à assurer l'accouplement de mouvement de rotation des rouleaux à l'extérieur de logement.

FIG. 1

FIG. 2

FIG. 3

FIG. 5

FIG. 4

FIG. 6

FIG. 7

FIG. 8

FIG. 9

FIG. 10

103  108  113  104

112  102

110  107

106

105

FIG. 11

128  120  122

127

129

116  114

126  125  118  124

FIG. 12

130  134  131

135

132

133

4